(19) Europäisches Patentamt / European Patent Office / Office européen des brevets

(11) **EP 2 664 684 B1**

(12) **EUROPÄISCHE PATENTSCHRIFT**

(45) Veröffentlichungstag und Bekanntmachung des Hinweises auf die Patenterteilung:
**11.07.2018 Patentblatt 2018/28**

(21) Anmeldenummer: **13167591.0**

(22) Anmeldetag: **14.05.2013**

(51) Int Cl.:
*C23C 4/08* (2016.01)    *C22C 38/00* (2006.01)
*C22C 38/02* (2006.01)    *C22C 38/04* (2006.01)
*C22C 38/42* (2006.01)    *B23K 35/30* (2006.01)
*B23K 35/02* (2006.01)    *B32B 15/01* (2006.01)
*C22C 38/12* (2006.01)    *C22C 38/16* (2006.01)
*C22C 38/44* (2006.01)    *C23C 4/06* (2016.01)
*C23C 4/12* (2016.01)    *C23C 4/067* (2016.01)
*C23C 4/131* (2016.01)

(54) **Verwendung eines Chromstahls mit hoher Härte und Korrosionsbeständigkeit zum Beschichten metallischer Substrate**

Use of chromium steel with high hardness and corrosion resistance for coating of metallic substrates

Utilisation d'un acier chromé à haute dureté et résistance à la corrosion pour le revêtement des surfaces métalliques

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.05.2012 DE 102012009496**

(43) Veröffentlichungstag der Anmeldung:
**20.11.2013 Patentblatt 2013/47**

(73) Patentinhaber: **Zapp Precision Metals GmbH
58239 Schwerte (DE)**

(72) Erfinder:
• **Castro, Victor
58730 Fröndenberg (DE)**

• **Pacher, Oskar Dr.
8041 Graz (AT)**

(74) Vertreter: **Tilmann, Max Wilhelm et al
König-Szynka-Tilmann-von Renesse
Patentanwälte Partnerschaft mbB
Mönchenwerther Straße 11
40545 Düsseldorf (DE)**

(56) Entgegenhaltungen:
WO-A1-2004/007780    WO-A1-2004/018271
DE-A1- 4 447 514    DE-A1- 19 808 276
JP-A- H09 267 190    JP-A- 2009 203 528

**Beschreibung**

Die Erfindung betrifft einen Chromstahl mit hoher Härte und Korrosionsbeständigkeit sowie dessen Verwendung zum Beschichten metallischer Substrate.

Chromstähle zum thermischen Beschichten metallischer Substrate sind in großer Zahl bekannt. So beschreibt die deutsche Patentschrift 10 2011 009 443 B3 einen drahtförmigen Spritzwerkstoff, der aus 0,28 bis 0,60 Gew.% Kohlenstoff, 0,05 bis 0,35 Gew.% Chrom, 1 bis 1,4 Gew.% Mangan, 0,005 bis 0,03 Gew.% Stickstoff, 0,6 bis 0,8 Gew.% Silizium, bis 0,03 Gew.% Molybdän, bis 0,1 Gew.% Nickel, 0,04 bis 0,15 Gew.% Kupfer, bis 0,15 Gew.% Vanadium, bis 0,01 Gew.% Schwefel, Phosphor und Aluminium, Rest Eisen besteht. Dieser Stahl dient zum Beschichten der Laufbahnen von Zylinderkurbelgehäusen, es fehlt ihm jedoch wegen seines geringen Chromgehalts an einer ausreichenden Korrosionsbeständigkeit.

Einen weiteren Werkstoff zum thermischen Beschichten beschreibt die deutsche Patentschrift 10 2010 021 300 B4; er besteht aus einem niob-, titan- und borfreien Stahl mit einem sehr hohen Kohlenstoffgehalt von 0,7 bis 1,2 Gew.%, 0,01 bis 2 Gew.% Stickstoff, 0,01 bis 1 Gew.% Silizium, 0,8 bis 2 Gew.% Mangan, 12 bis 20 Gew.% Chrom, 0,4 bis 1,3 Gew.% Molybdän, 0,01 bis 1 Gew.% Nickel, 0,01 bis 0,4 Gew.% Kupfer, 0,01 bis 0,3 Gew.% Vanadium, 0,01 bis 0,35 Gew.% Schwefel und 0,01 0,045 Gew.% Phosphor, Rest Eisen.

Bei diesem Stahl besteht jedoch infolge des hohen Kohlenstoffgehalts die Gefahr, dass es zum Entstehen von stabilen Chromkarbiden und demgemäß zu einer Chromverarmung kommt, die zwangsläufig mit einer Beeinträchtigung der Korrosionsbeständigkeit verbunden ist. Des Weiteren führt der hohe Kohlenstoffgehalt des Stahls zu einer Stabilisierung des Austenitanteils im Gefüge der Beschichtung, der die Verschleißbeständigkeit und die Härte der Beschichtung erheblich beeinträchtigt und keine möglichst vollständige Umwandlung des Austenits in Martensit erlaubt. Das Verfahren ist daher lediglich auf eine überwiegend martensitische Schicht gerichtet.

Des Weiteren ist aus der deutschen Patentschrift 195 39 640 C1 eine Zylinderlaufbuchse mit einer durch atmosphärisches Plasmaspritzen aufgebrachten Nickel-Chrom-Schutzschicht mit 60 bis 90 Gew.% Nickel und 5 bis 20 Gew.% Chrom bekannt, die zudem 2 bis 10 Gew.% Aluminium und 1 Gew.% Yttrium enthalten kann und darauf abzielt, kühlmittelbedingte Kavitations- und Korrosionsschäden zu vermeiden.

Schließlich beschreibt die europäische Patentschrift 1 022 351 B2 unter anderem eine ebenfalls durch Plasmaspritzen aufgebrachte Zylinderlauffläche unter Verwendung eines Pulvers aus 0,01 bis 0,8 Gew.% Kohlenstoff, 0,1 bis 1,5 Gew.% Mangan, 11 bis 18 Gew.% Chrom, 0,1 bis 5 Gew.% Molybdän, 0,01 bis 0,2 Gew.% Schwefel und 0,01 bis 0,1 Gew.% Phosphor, Rest Eisen. Dieses Pulver enthält jedoch keine weiteren Bestandteile.

Da sich keiner der bekannten Beschichtungen hinsichtlich der angestrebten Gefügeausbildung vollauf bewährt hat, ist die Erfindung auf das Problem gerichtet, einen tribologisch und funktional optimierten Beschichtungswerkstoff zu verwenden, der insbesondere eine weitestgehende Martensitumwandlung gewährleistet.

DE 198 08 276 A1 beschreibt eine Stahllegierung für Gleitelemente 0,2 bis 0,65% Kohlenstoff, 12,0 bis 20,0% Chrom, 0,3 bis 5,0% Molybdän, 0,02 bis 0,4% Stickstoff, bis 2% Mangan, bis 1,4% Silizium, bis 2% Nickel, bis 0,5% Kupfer, bis 0,2% Vanadium und/oder Niob, bis 0,1% Aluminium, Rest Eisen einschließlich erschmelzungsbedingter Verunreinigungen.

WO 2004/018271 A1 offenbart ein Federelement aus einem ferritischen Chromstahl mit 0,03 bis 0,12 % Kohlenstoff, 0,2 bis 0,9 % Silizium, 0,3 bis 1 % Mangan, 13 bis 20 % Chrom, unter 0,5% Nickel, 0,1 bis 2,0 % Molybdän, 0,05 bis 1,0 % Kupfer, 0,02 bis 0,05 % Stickstoff, unter 0,01 % Titan, 0,01 bis 0,10 % Niob und 0,02 bis 0,25 % Vanadium, Rest Eisen.

JP 2009 203528 A offenbart einen martensitischen, rostfreien Stahl für ein Webmaschinenelement mit hervorragender Korrosionsbeständigkeit und Verschleißfestigkeit nach dem Abschrecken und Tempern mit einer Zusammensetzung bestehend aus 0,20 bis 0,30% Kohlenstoff, 0,30 bis 0,60% Silizium, ≤0,60% Mangan, ≤0,035% Phosphor, ≤0,010% Schwefel, 15,0 bis 16,6% Chrom, 0,10 bis 0,60% Nickel, ≤0,50% Kupfer, ≤0,5% Molybdän, 0,10% Vanadium, ≤0,05% Niob, ≤0,05% Titan, ≤0,03% Aluminium, 0,04 bis 0,09% Stickstoff, Rest Eisen einschließlich erschmelzungsbedingter Verunreinigungen mit den Bedingungen: C + N: 0,25 bis 0,35%, C / N: 2,2 bis 6,0 und Cr + 3,3 Mo: 15 bis 16,6.

Die Lösung dieses Problems besteht in der Verwendung eines Chromstahls, bestehend aus 0,1 bis 0,3 Gew.% Kohlenstoff, 0,01 bis 0,1 Gew.% Stickstoff, 0,01 bis 1 Gew.% Silizium, 0,01 bis 2 Gew.% Mangan, 11 bis 16 Gew.% Chrom, 0,1 bis 2 Gew.% Molybdän, 0,01 bis 0,5 Gew.% Nickel, 0,01 bis 0,4 Gew.% Kupfer, 0,01 bis 0,1 Gew.% Niob, bis 0,1 Gew.% Titan, bis 0,1 Gew.% Vanadium, bis 0,02 Gew.% Schwefel, 0bis 0,02 Gew.% Phosphor, und bis 0,02 Gew.% Bor, Rest Eisen einschließlich erschmelzungsbedingter Verunreinigungen zum Herstellen einer Verschleißbeschichtung mit martensitischem Gefüge und einer Härte von mindestens 450 HVI durch thermisches Beschichten metallischer Substrate. Dieser Stahl enthält vorzugsweise 0,15 bis 0,28 Gew.% Kohlenstoff, 0,3 bis 1,5 Gew.% Mangan, bis 14 Gew.% Chrom, bis 1,5 Gew.% Molybdän, bis 0,35 Gew.% Nickel, mindestens 0,01 Gew.% Titan und mindestens 0,001 Gew.% Bor einzeln oder nebeneinander. Insbesondere bevorzugt enthält der Stahl bis 13 Gew.% Chrom. Insbesondere bevorzugt enthält der Stahl 0,1 oder mehr Gew.% Molybdän.

Des Weiteren sollte der Stahl vorzugsweise der Bedingung

$$30 \times ( \text{Gew.\%C} + \text{Gew.\%N}) + 0{,}5 ( \text{Gew.\%Mn} + \text{Gew.\%Ni}) = 7 \text{ bis } 14 \quad (1)$$

und/oder

$$3 \times ( \text{Gew.\%Cr} + \text{Gew.\%Mo}) + 4{,}5 ( \text{Gew.\%Si}) = 50 \text{ bis } 58 \quad (2)$$

genügen. Dabei können die Gehalte an Kohlenstoff und Chrom wie folgt eingestellt sein

$$( \text{Gew.\%C})/( \text{Gew.\%Cr}) = (6{,}2 \text{ bis } 27) \times 10^{-3} \quad (3)$$

In einer bevorzugten Ausführungsform genügt der Stahl der Bedingung

$$30 \times ( \text{Gew.\%C} + \text{Gew.\%N}) + 0{,}5 ( \text{Gew.\%Mn} + \text{Gew.\%Ni}) = 7 \text{ bis } 12 \quad (1')$$

und/oder

$$3 \times ( \text{Gew.\%Cr} + \text{Gew.\%Mo}) + 4{,}5 ( \text{Gew.\%Si}) = 30 \text{ bis } 40 \quad (2')$$

In einer bevorzugten Ausführungsform genügt der Stahl der Bedingung

$$30 \times ( \text{Gew.\%C} + \text{Gew.\%N}) + 0{,}5 ( \text{Gew.\%Mn} + \text{Gew.\%Ni}) = 9 \text{ bis } 14 \quad (1'')$$

und/oder

$$3 \times ( \text{Gew.\%Cr} + \text{Gew.\%Mo}) + 4{,}5 ( \text{Gew.\%Si}) = 50 \text{ bis } 58 \quad (2'')$$

Der erfindungsgemäß verwendete Stahl wird zum Herstellen einer Verschleißbeschichtung mit martensitischem Gefüge und einer Härte von mindestens 450 HVI durch thermisches Beschichten metallischer Substrate eingesetzt, insbesondere zum Beschichten von Lagerlauf- und Gleitflächen, Zylinderlaufflächen, Kolbenringen, Zahnrädern und Getrieben.

Was die einzelnen Bestandteile des erfindungsgemäßen Stahls anbetrifft, fördert der Kohlenstoff die Bildung von Austenit und reagiert mit Chrom, Titan, Vanadium und Niob unter Bildung von Karbiden, wodurch die Härte gesteigert, in Verbindung mit dem Chrom jedoch die Korrosionsbeständigkeit herabgesetzt wird. Da jedoch bei einem Kohlenstoffgehalt oberhalb von 0,3 Gew.% bei einem Auftragsschmelzen im Lichtbogen oder im Plasma die Stabilisierung des Austenits verstärkt einsetzt, verhindert dies die Bildung von Martensit beim raschen Abkühlen einer verhältnismäßig dünnen Verschleißschicht. Aus diesem Grund soll dieser Grenzwert von 0,3 Gew.% Kohlenstoff nicht überschritten werden. Für das Entstehen von Feinstausscheidungen mit Titan und/oder Niob und/oder Vanadium ist hingegen ein unterer Grenzwert des Kohlenstoffs von 0,1 Gew.% erforderlich, um beispielsweise eine gute Ölbenetzbarkeit zu erreichen.

Silizium stabilisiert den Ferrit und wirkt gleichzeitig als Desoxidationsmittel, es bindet auch Sauerstoff. Dafür ist bei gleichzeitiger Anwesenheit von Niob und Titan ein Mindestgehalt von 0,1 Gew.% erforderlich. Da Silizium mit anderen Elementen zur Bildung von intermetallischen Phasen neigt, soll ein oberer Grenzwert von 1 Gew.% nicht überschritten werden.

Mangan ist mit einem Gehalt von 0,01 bis 2 Gew.% vertreten. Gemeinsam mit Kohlenstoff, Stickstoff und Nickel stabilisiert es das Austenitgefüge, weshalb der obere Grenzwert von 2 Gew.% nicht überschritten werden darf. Die synergetische Wirkung von Mangan kennzeichnet die Formelbeziehung (1). Da eine Wirkung von Mangan unterhalb von 0,01 Gew.% nicht nachweisbar ist, gilt dieser Wert als untere Gehaltsgrenze.

Chrom verbessert die Korrosionsbeständigkeit. Für eine ausreichende Wirkung bei zwangsläufig rasch aus der Schmelze abgekühlten Aufschmelzlegierungen ist ein Mindestgehalt von 11 Gew.% erforderlich. Mit dem Kohlenstoff bildet Chrom Karbide, wodurch es in deren Umgebung zu einer Verarmung an gelöstem Chrom kommt, was die Korrosionsbeständigkeit lokal vermindert. Die Erfindung sieht deshalb vor, das synergetische Verhältnis von Kohlenstoff zu Chrom durch den Wertebereich (6,2 bis 27)x $10^{-3}$ der Formelbeziehung (3) auf sehr niedrige Werte festzulegen. Da Chrom jedoch ein ferritisches und damit weiches Gefüge fördert, darf der obere Grenzwert 16 Gew.% nicht übersteigen. In einer bevorzugten Ausführungsform wird ein oberer Grenzwert von 14 Gew.%, insbesondere bevorzugt 13 Gew.% gewählt, um das Risiko der Bildung von Mischgefügen und des Verlassens des Martensitgebiets zu reduzieren.

Molybdän verbessert in Kombination mit Chrom die Korrosionsbeständigkeit. Gehalte über 2 Gew.% verändern jedoch das Abkühlungsverhalten, was nicht von Vorteil ist. Da Molybdängehalte unterhalb von 0,01 Gew.% keine Wirkung zeigen, erübrigen sich niedrigere Grenzwerte.

Nickel erweitert das Gamma-Gebiet und stabilisiert den Austenit, was bei thermisch aufgetragenen Schichten deren Härte und Verschleißfestigkeit herabsetzt. Daher darf der Nickelgehalt von 0,5 Gew.% nicht übersteigen. Der untere Grenzwert kann hingegen bei 0,01 Gew.% liegen, da geringere Gehalte praktisch wirkungslos sind. Wegen der synergetischen Wirkung mit den Elementen Kohlenstoff, Stickstoff und Mangan ist die Einhaltung der Formelbeziehung 1 von Vorteil.

Stickstoff reagiert mit Chrom, Titan, Vanadium und Niob unter Bildung von Nitriden. Wegen der gleichzeitigen Anwesenheit von Kohlenstoff bilden sich jedoch Karbonitride, die eine günstige Ölbenetzung bewirken und in geringer Konzentration für das Entstehen tribologischer Schichten günstig sind. Da Stickstoff beim thermischen Beschichten aus dem Schutzgas aufgenommen werden kann, braucht ein oberer Grenzwert von 0,1 Gew.% im Beschichtungswerkstoff (Draht, Pulver) nicht überschritten zu werden.

Vanadium, Titan und Niob sind starke Karbid- und Keimbildner sowie als Keime für die Martensitbildung günstig. Sie bilden mit Stickstoff Nitride und bei gleichzeitiger Anwesenheit von Kohlenstoff, Stickstoff und Sauerstoff auch Oxikarbonitride, die vorteilhaft für eine Ölbenetzung sind. Die Konzentration der Summe dieser Elemente im Beschichtungswerkstoff sollte jedoch den oberen Grenzwert von 0,1 Gew.% nicht übersteigen. Zum Abbinden von Stickstoff und für eine Keimbildung ist ein Summen- oder Einzelgehalt von 0,01 Gew.% ausreichend, beispielsweise 0,01 Gew.% Niob oder mit 0,01 Gew.% (Niob + Titan + Vanadium).

Bor erhöht in geringer Konzentration die Festigkeit und bildet feinst verteilte Ausscheidungen von Boriden. Bei höheren Gehalten entstehen jedoch Versprödungen, weshalb ein oberer Grenzwert von 0,02 Gew.% Bor nicht überschritten werden sollte. Bei einem Pulver könnte der Gehalt jedoch bis 1 Gew.% betragen.

Die Versuchslegierungen der Tabelle 1 wurden in einem Mittelfrequenzofen unter Schutzgas erschmolzen, in längliche Gussformen abgegossen und bei 820 °C für 6 Stunden geglüht. Nach Abkühlung auf Raumtemperatur wurde die Gußhaut grob abgeschliffen und die erhaltenen Rohlinge maschinell unter Verwendung von Schleifscheiben aus Korund zu dünnen Stäben überschliffen. Diese Stäbe bildeten das Versuchsmaterial für thermische Plasmaspritzbeschichtungen (Proben E1 bis E4 und nicht zur Erfindung gehörende Vergleichslegierungen V1 bis V3).

Die Beschichtung erfolgte dabei so, dass die Versuchsdrähte bzw. die dünnen Stäbe in einer PTWA Anlage (PTWA: Plasma Transferred Arc Wire) direkt in einen durch elektrischen Strom erzeugten Plasmastrahl eingeführt wurden. Unter der gleichzeitigen Einwirkung eines Zerstäuber- und Transportgases wurde der im Plasmastrahl erschmolzene Versuchsstahl in feinst verteilter Form mit hoher Geschwindigkeit und hoher kinetischer Energie auf die Oberfläche von quadratischen Stahlproben (Substrat: Feinkorn C-Stahl) der Größe 20x 20x 10 mm Dicke hin beschleunigt, wobei das Substrat eine ca. 200μm dicke Beschichtung erhielt.

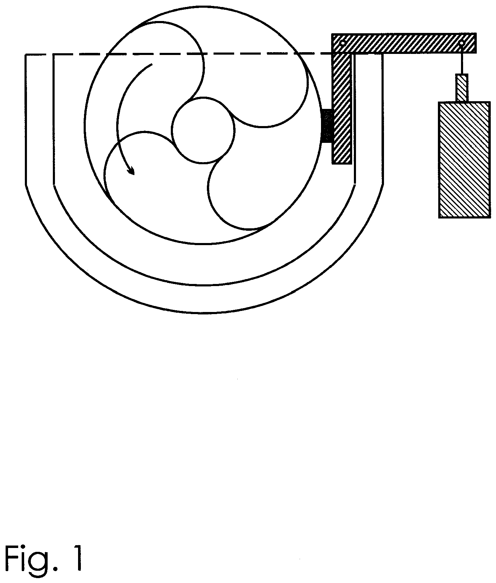

Für eine Bewertung der Abrieb- bzw. Verschleißfestigkeit wurden die beschichteten Versuchsproben (1) in einem Schleifradtestgerät eingespannt (vgl. Fig.1). Der Anpressdruck der Proben wurde bei allen Versuchen mit einem 2 kg Gewichtstück (3) konstant gehalten und die Umdrehungszahl des Schleifrades auf 20 U/min eingestellt. Da der Reibverschleiß auch von der Temperatur abhängt, wurde dieser Einfluss dadurch ausgeschaltet, dass das Reibrad (4) sowie die Probe (1) unter Wasser gesetzt wurden. Zur Steigerung des Abriebverschleißes und zur Erzielung praktikabler Versuchszeiten wurde dem Wasser Al2O3 (Korund)-Pulver zugesetzt. Die am Schleifrad seitlich angebrachten Flügel hatten dabei die Aufgabe, das zur Sedimentation neigende Al2O3 stetig aufzuwirbeln.

Der Verschleißwiderstand der Beschichtung wurde durch Bestimmung der Gewichtsabnahme nach einer Prüfdauer von 6 Stunden im Schleifradtest ermittelt. Für eine zahlenmäßige Bewertung des Verschleißwiderstandes der Beschichtung wurde der Verschleißfaktor V nach der Formel

$$V \;=\; (M_u \,/\, M_b)$$

bestimmt bzw. berechnet. In dieser Formel bedeutet:

$M_u$     Materialverlust in mg, einer nicht beschichteten Probe,
$M_b$     Materialverlust in mg einer beschichteten Probe.

Nach dieser Formel ist V eine Zahl größer 1, wenn die beschichtete Probe einen höheren Verschleißwiderstand aufweist, also einen kleineren Materialverlust aufweist ($M_b < M_u$). Ist hingegen die Schicht in ihrer Abriebfestigkeit schlechter als eine nicht beschichtete Probe (z.B. weil die Schicht zu weich ist) nimmt V einen Zahlenwert < 1 ein.

Die Bestimmung der Porosität der Beschichtung erfolgte durch Ausmessung der maximalen Porengröße unter dem Mikroskop. Dafür wurde ein Messfeld von 200 x 200 μm herangezogen und die in diesem Messfeld auftretende maximale Porengröße als Maßzahl für die Porosität verwendet.

Für die Bestimmung der Härte der Beschichtung wurde die Mikrohärte HV 0,2 durch Ausmessung unter dem Mikroskop ermittelt. Die Ergebnisse sind in Tabelle 3 wiedergegeben. Bei der Probe V1 mit dem höchsten C- und Cr-Gehalt zeigt die Schicht eine hohe Porosität mit Poren einer Maximalgröße von 16 μm, wodurch die Mikrohärte HV 0,2 nicht mehr bestimmbar war (Tabelle3).

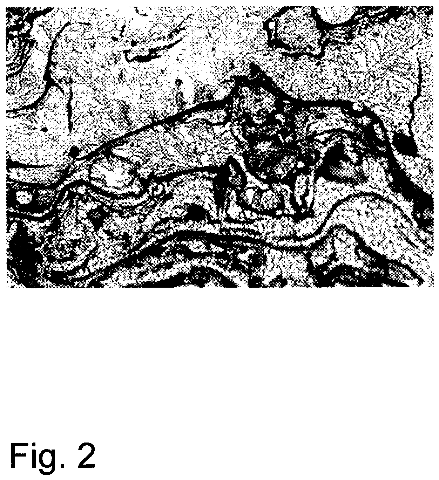

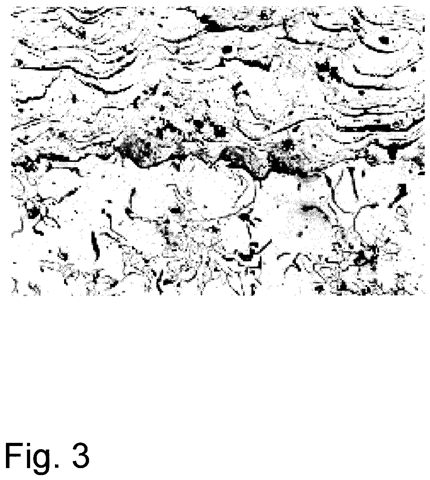

Für die Bewertung der Güte der Schichten wurden Querschliffe angefertigt und das Gefüge beurteilt. Fig. 2 und Fig. 3 zeigen die Gefügestruktur der Proben E4 und V3. Die Versuchsergebnisse der Tabelle 3 zeigen, dass die Verschleißfestigkeit von Plasmaspritzschichten innerhalb des Schutzumfanges der Erfindung günstige Werte annimmt. Aufgrund der beim Plasmaspritzen auftretenden extrem hohen Abschreckgeschwindigkeiten beim Auftreffen der aufgeschmolzenen Beschichtungspartikel auf der zu beschichtenden Oberfläche, kommt es zur Ausbildung von Ungleichgewichtszuständen. So kann z.B. bei einem hohen C- und Cr-Gehalt einer Spritzdrahtlegierung in der gebildeten Schicht die Bildung einer Beschichtung mit viel Chromkarbid unterdrückt werden. Vielmehr können sich Gefügezustände einstellen, die überraschend weich sein können und einen schlechten Verschleißwiderstand aufweisen. Dies zeigt, dass eine hohe Ausgangshärte eines Spritzdrahtes nicht zwingend auch eine harte und verschleißfeste Schicht ergeben muss (nicht zur Erfindung gehörende Vergleichslegierungen V1 bis V3 in Tab. 2 und 3).

**Tabelle 1**

| Vers.Nr. | %C | %N | %Si | %Mn | %Cr | %Mo | %Ni | %Cu | %Nb |
|---|---|---|---|---|---|---|---|---|---|
| E1 | 0,14 | 0,09 | 0,45 | 1,10 | 11,30 | 0,08 | 0,03 | 0,22 | 0,06 |
| E2 | 0,20 | 0,04 | 0,66 | 0,76 | 12,00 | 0,12 | 0,04 | 0,31 | 0,04 |
| E3 | 0,26 | 0,03 | 0,40 | 0,60 | 12,08 | 0,20 | 0,04 | 0,12 | 0,08 |
| E4 | 0,28 | 0,02 | 0,10 | 0,55 | 12,35 | 0,05 | 0,05 | 0,04 | 0,02 |
|  |  |  |  |  |  |  |  |  |  |
| V1 | 0,85 | 0,08 | 1,22 | 1,65 | 16,00 | 2,50 | 1,25 | 0,02 | 0,00 |
| V2 | 0,38 | 0,12 | 1,45 | 1,20 | 13,80 | 1,90 | 1,86 | 0,02 | 0,00 |
| V3 | 0,08 | 0,05 | 0,86 | 1,25 | 14,50 | 0,35 | 0,99 | 0,06 | 0,00 |

**Tabelle 2**

|  | Ausgangshärte |
|---|---|
| Versuchs Nr. | HRC |
| E1 | 47 |
| E2 | 47 |
| E3 | 56 |
| E4 | 57 |
|  |  |
| V1 | 58 |
| V2 | 56 |
| V3 | 31 |

**Tabelle 3**

| Versuch Nr. | Max. Porosität | HV 0,2 | L | Gefüge |
|---|---|---|---|---|
| E1 | 10 | 560 | 3,4 | Martensit + Karbide |
| E2 | 10 | 550 | 3,2 | Martensit + Karbide |
| E3 | 7 | 605 | 3,9 | Martensit + Karbide |
| E4 | 8 | 635 | 4,2 | Martensit + Karbide |
| | | | | |
| V1 | 16 | n.b. | 1,6 | Austenit + Karbide |
| V2 | 11 | 340 | 0,9 | Austenit + Karbide |
| V3 | 7 | 290 | 0,6 | Ferrit |

**Patentansprüche**

1. Verwendung eines Drahts aus einem austenitischen Stahl bestehend aus

   0,1 bis 0,3 Gew.% Kohlenstoff
   0,01 bis 0,1 Gew.% Stickstoff
   0,01 bis 1 Gew.% Silizium
   0,01 bis 2 Gew.% Mangan
   11 bis 16 Gew.% Chrom
   0,01 bis 2 Gew.% Molybdän
   0,01 bis 0,5 Gew.% Nickel
   0,01 bis 0,4 Gew.% Kupfer
   0,01 bis 0,1 Gew.% Niob
   0 bis 0,1 Gew.% Titan
   0 bis 0,1 Gew.% Vanadium
   0 bis 0,02 Gew.% Schwefel
   0 bis 0,02 Gew.% Phosphor
   0 bis 0,02 Gew.% Bor
   Rest Eisen einschließlich erschmelzungsbedingter Verunreinigungen zum Herstellen von Verschleißbeschichtungen mit martensitischem Gefüge und einer Härte von mindestens 450 HVI durch thermisches Beschichten metallischer Substrate.

2. Verwendung eines Drahts nach Anspruch 1, der jedoch 0,3 bis 1,5 Gew.% Mangan, bis 14 Gew.% Chrom, bis 1,5 Gew.% Molybdän, bis 0,35 Gew.% Nickel, mindestens 0,01 Gew.% Titan und mindestens 0,001 Gew.% Bor einzeln oder nebeneinander enthält.

3. Verwendung eines Drahts nach Anspruch 1 oder 2, der jedoch der Bedingung 30 x ( Gew.%C + Gew.%N) + 0,5 (Gew.%Mn + Gew.%Ni) = 7 bis 14 genügt.

4. Verwendung eines Drahts nach einem der Ansprüche 1 bis 3, der jedoch der Bedingung 3 x (Gew.%Cr + Gew.%Mo) + 4,5 (Gew.%Si) = 30 bis 58 genügt.

5. Verwendung eines Drahts nach einem der Ansprüche 1 bis 4, der jedoch der Bedingung (Gew.%C)/(Gew.%Cr) = (6,2 bis 27) x $10^{-3}$ genügt.

6. Verwendung eines Drahts nach einem der Ansprüche 1 bis 5 zum Beschichten von Lagerlauf- und Gleitflächen, insbesondere Zylinderlaufflächen, Kolbenringen, Zahnräder und Getriebe.

**Claims**

1. Use of a wire made of an austenitic steel comprising

   0.1 to 0.3 % by weight carbon
   0.01 to 0.1 % by weight nitrogen
   0.01 to 1 % by weight silicon
   0.01 to 2 % by weight manganese
   11 to 16 % by weight chromium
   0.01 to 2 % by weight molybdenum
   0.01 to 0.5 % by weight nickel
   0.01 to 0.4 % by weight copper
   0.01 to 0.1 % by weight niobium
   0 to 0.1 % by weight titanium
   0 to 0.1 % by weight vanadium
   0 to 0.02 % by weight sulphur
   0 to 0.02 % by weight phosphor
   0 to 0.02 % by weight boron
   remainder iron including smelting-related impurities
   for the production of wear-resistant coatings with a martensitic structure and a hardness of at least 450 HVI by thermal coating of metal substrates.

2. Use of a wire according to Claim 1 which, however, contains 0.3 to 1.5 % by weight manganese, up to 14 % by weight chromium, up to 1.5 % by weight molybdenum, up to 0.35 % by weight nickel, at least 0.01 % by weight titanium and at least 0.001 % by weight boron, separately or in combination.

3. Use of a wire according to Claim 1 or 2 which, however, satisfies the condition 30 x (% by weight C + % by weight N) + 0.5 (% by weight Mn + % by weight Ni) = 7 to 14.

4. Use of a wire according to one of Claims 1 to 3 which, however, satisfies the condition 3 x (% by weight Cr + % by weight Mo) + 4.5 (% by weight Si) = 30 to 58.

5. Use of a wire according to one of Claims 1 to 4 which, however, satisfies the condition (% by weight C)/(% by weight Cr) = (6.2 to 27) x $10^{-3}$.

6. Use of a wire according to one of Claims 1 to 5 for coating bearing and sliding surfaces, in particular cylinder running surfaces, piston rings, gear wheels and transmissions.

**Revendications**

1. Utilisation d'un fil en un acier austénitique contenant

   0,1 à 0,3 % en poids de carbone
   0,01 à 0,1 % en poids d'azote
   0,01 à 1 % en poids de silicium
   0,01 à 2 % en poids de manganèse
   11 à 16 % en poids de chrome
   0,01 à 2 % en poids de molybdène
   0,01 à 0,5 % en poids de nickel
   0,01 à 0,4 % en poids de cuivre
   0,01 à 0,1 % en poids de niobium
   0 à 0,1 % en poids de titane
   0 à 0,1 % en poids de vanadium
   0 à 0,02 % en poids de soufre
   0 à 0,02 % en poids de phosphore
   0 à 0,02 % en poids de bore,
   le reste étant du fer, y compris des impuretés issues du processus de fusion pour la fabrication de couches d'usure avec une structure martensite et une dureté d'au moins 450 HVI grâce à un revêtement thermique de substrats métalliques.

2. Utilisation d'un fil selon la revendication 1, qui contient toutefois 0,3 à 1,5 % en poids de manganèse, jusqu'à 14 % en poids de chrome, jusqu'à 1,5 % en poids de molybdène, jusqu'à 0,35 % en poids de nickel, au moins 0,01 % en poids de titane et au moins 0,001 % en poids de bore seul ou côte à côte.

3. Utilisation d'un fil selon la revendication 1 ou 2, qui répond toutefois à la condition 30 x (% en poids de C + % en poids de N) + 0,5 (% en poids de Mn + % en poids de Ni) = 7 à 14.

4. Utilisation d'un fil selon l'une quelconque des revendications 1 à 3, qui répond toutefois à la condition 3 x (% en poids de Cr + % en poids de Mo) + 4,5 (% en poids de Si) = 30 à 58.

5. Utilisation d'un fil selon l'une quelconque des revendications 1 à 4, qui répond toutefois à la condition (% en poids de C)/(% en poids de Cr) = (6,2 à 27) x $10^{-3}$.

6. Utilisation d'un fil selon l'une quelconque des revendications 1 à 5 pour le revêtement de surfaces de glissement et de frottement, notamment des surfaces de glissement de cylindre, des segments de piston, des roues dentées et des engrenages.

Fig. 1

Fig. 2

Fig. 3

**IN DER BESCHREIBUNG AUFGEFÜHRTE DOKUMENTE**

**In der Beschreibung aufgeführte Patentdokumente**

- DE 102011009443 B3
- DE 102010021300 B4
- DE 19539640 C1
- EP 1022351 B2
- DE 19808276 A1
- WO 2004018271 A1
- JP 2009203528 A